Europäisches Patentamt

European Patent Office

Office européen des brevets

(11) Publication number: **0 427 539 A2**

# EUROPEAN PATENT APPLICATION

(21) Application number: **90312193.7**

(51) Int. Cl.⁵: **G06F 13/10**

(22) Date of filing: **07.11.90**

(30) Priority: **09.11.89 US 434049**

(43) Date of publication of application:
**15.05.91 Bulletin 91/20**

(84) Designated Contracting States:
**DE FR GB**

(71) Applicant: **International Business Machines
Corporation
Old Orchard Road
Armonk, N.Y. 10504(US)**

(72) Inventor: **Dean, Mark Edward
716 University Drive
Menlo Park, California 94025(US)**

Inventor: **Drerup, Bernard Charles
7201 Wood Hollow Drive, Apt. 309
Austin, Texas 78731(US)**
Inventor: **Peterson, James Chester
2107 Primrose Trail
Round Rock, Texas 78664(US)**
Inventor: **Voigt, Wendel Glenn
3229 Duval Road, no. 2520
Austin, Texas 78759(US)**

(74) Representative: **Bailey, Geoffrey Alan
IBM United Kingdom Limited Intellectual
Property Department Hursley Park
Winchester Hampshire SO21 2JN(GB)**

(54) **I/O Emulation.**

(57) A system comprising multiprocessors, wherein one said processor is a host processor and at least one of said other prpcessors is a subsystem processor, having means for transparent access from said subsystem processor to I/O devices normally accessible only by said host system processor. The system includes monitoring I/O cycles attempted by the subsystem and putting the subsystem processor in a wait state when an attempt to perform an I/O cycle on a restricted device is made. The host system processor performs the I/O operation, returns the results to a register accessible by the subsystem processor and terminates the wait state thereof.

FIG. 3

## I/O Emulation.

The present invention relates to data processing systems. More specifically it relates to multiprocessor systems in which some of the processors have private I/O functions.

An industry segment has developed for providing add on feature cards having various functional capability to personal computers such as IBM Personal System/2 computers (IBM and Personal Systems/2 are trademarks of International Business Machines Corporation). Frequently such feature cards provide additional I/O ports, memory capability and the like. Recently, the industry has seen the introduction of feature cards with the basic constituents of another personal computer; that is, a processor, memory and means for connecting keyboard and display devices.

One such product family is available from Alloy Computer Products, Inc. which provides two versions of a personal computer on a card containing dedicated microprocessor, random access memory (RAM); and terminal and communications ports, which may be installed in a server along with software and connected to low end terminals or personal computers, thus turning dumb terminals into intelligent terminals.

In such add on, enhanced systems, the additional feature card is connected to the host system planar, printed circuit board, and to the system bus. The additional feature card may act as an upgrade to the host system by substituting the add on processor and memory capability and so forth for that originally provided with the host system, or the add on function may operate somewhat independently as a separate system for another, additional user.

In the first situation, and sometimes in the latter, it may be necessary for the feature card processor, hereinafter subsystem processor, to service I/O devices, those associated with the host system as well as those associated only with the adapter card.

In order for a subsystem processor, such as the processor on an intelligent feature card, to service 170 devices, it must be able to access the register associated with each such I/O device and be accessible to interrupts generated by those I/O devices in need of service.

The present invention finds particular utility in IBM Personal System/2 computers, including the IBM Micro Channel bus (Micro Channel is a Trademark of International Business Machines Corporation). In such a computer system, the design parameters dictate that some host system I/O devices may only be accessed by the host system processor. These I/O devices, all having addresses below a certain level, are restricted in that I/O cycles from the system bus (Micro Channel) do not access the intended register.

Restricted addresses, i.e. below hex 108 in Personal System/2 Micro Channel environment, are assigned to I/O devices, for example a keyboard, associated with the host system but not interconnected to the Micro Channel. Thus I/O cycles initiated over the Micro Channel, or system bus will most like result in an error condition.

In a particular system environment which the present invention finds utility, the host processor is notified of an I/O service requirement by means of a single interrupt request signal (INTR-REQ). This INTR-REQ signal is generated by an interrupt controller from a plurality of up to 15 separate interrupt request lines (IRQ lines). Various I/O devices associated with both the host and subsystems, drive IRQ lines.

Most IRQ lines are driven to or from the system bus but not all. The signals not sent to or from the system bus are derived directly from I/O devices on the host system planar, that is not bus connected.

These design constraints are fully described in "IBM Personal System/2 Hardware Interface Technical Reference" First Edition (May 1988).

Typically, software written for IBM Personal System/2 computers, using either DOS or with OS/2 operating systems frequently require access to these restricted devices (OS/2 is a trade of International Business Machines Corporation). Since a feature card include a processor on which such code may be run, that code will function improperly upon attempts to access these devices via Micro Channel I/O cycles.

Viewed from one aspect the invention provides a method of access by a subsystem processor to host system I/O devices within a system comprising multiprocessors interconnected by a system bus, one of said processors being a host system and at least another of said processors being a subsystem processor, comprising the steps of; monitoring I/O cycles attempted by said subsystem processor; upon detecting an attempted access to an inaccessible I/O device in said host system, putting said subsystem processor in a wait state while said host system performs the subsystem attempted I/O cycle; and terminating the subsystem processor wait state when said I/O cycle is completed by said host system.

The present invention provides a resolution of this problem by enabling subsystem service of these I/O cycles to restricted devices, including hardware on the feature card and software executing in the host system processor. Hardware is provided for trapping accesses to these restricted devices, causing the subsystem processor to enter a wait state (busy) and informing the host system processor of these events.

Software executing in the host system processor then determines characteristics pertaining to the access the subsystem processor is attempting. In response to this determination, the host system processor performs the access to the restricted I/O device. If necessary, the host system processor then returns the results of the I/O cycle to the subsystem.

At this point the host system processor tells the subsystem processor it is ready to continue (not busy). The subsystem hardware then terminates the subsystem process wait/state and the overall cycle is complete. This method is completely transparent to any software running on the subsystem processor, because all steps are carried out by hardware and cooperating software.

An embodiment of the invention will now be described, by way of example only, with reference to the accompanying drawings in which:

Fig. 1 is an overall schematic diagram of a system including the present invention;

Fig. 2 is a schematic logic block diagram of an adapter card 30 (Fig. 1);

Fig. 3 shows in greater detail that section of Fig. 2 indicated at 115;

Fig. 4 is a flowchart of the process performed by software executing in the host system processor in Figs. 2 and 3.

Fig. 5 shows the plan view of a feature card with guest card; and

Fig. 6 is a side view of the structure of Fig. 5.

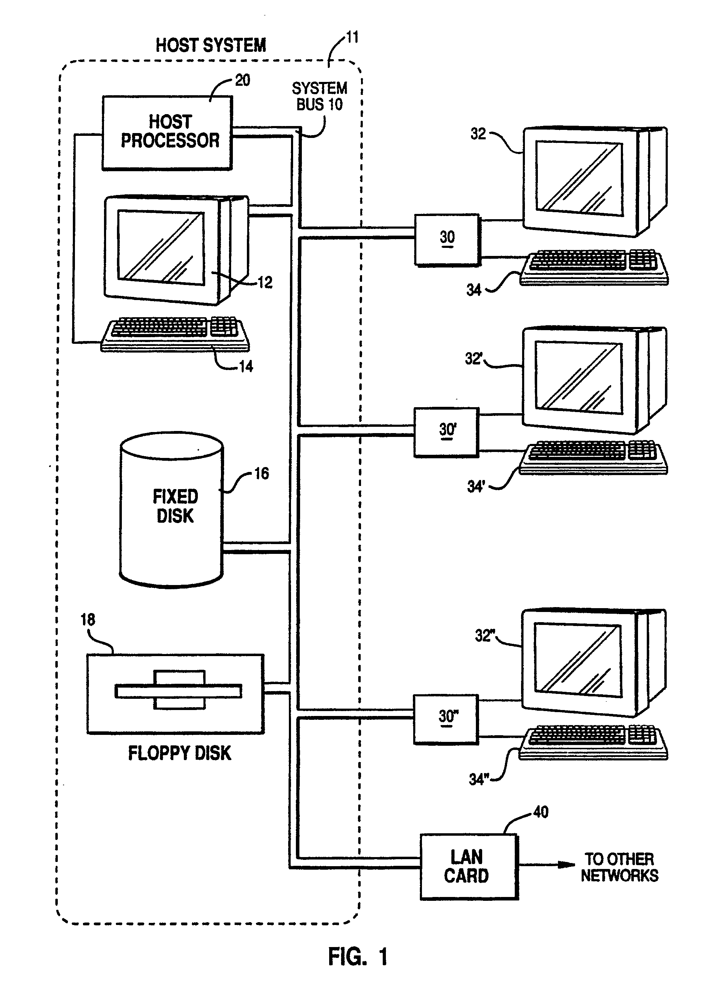

Refer now to Fig. 1. System bus 10 has connected thereto a conventional personal computer conf iguration, host system 11 which comprises video display 12, keyboard 14, hard file 16 and floppy disk 18, interconnected with and controllable by host system processor 20.

The present invention is embodied on an feature card 30, and a plurality of such feature cards may be interconnected to system bus 10. Three feature cards, 30, 30$'$ and 30$''$ are shown for illustrative purposes.

Each feature card, 30, 30$'$ and 30$''$ includes a subsystem comprising a processor, memory and I/O connections by which display 32, 32$'$ and 32$''$ and keyboard 34, 34$'$ and 34$''$ may be connected.

System bus 10 may for example be the IBM Micro Channel bus to which a network card 40 may also be connected. Thus, in addition to providing another user workstation at host system 11, the combination of host system and subsystem(s) may be a node of a network such as a local area network.

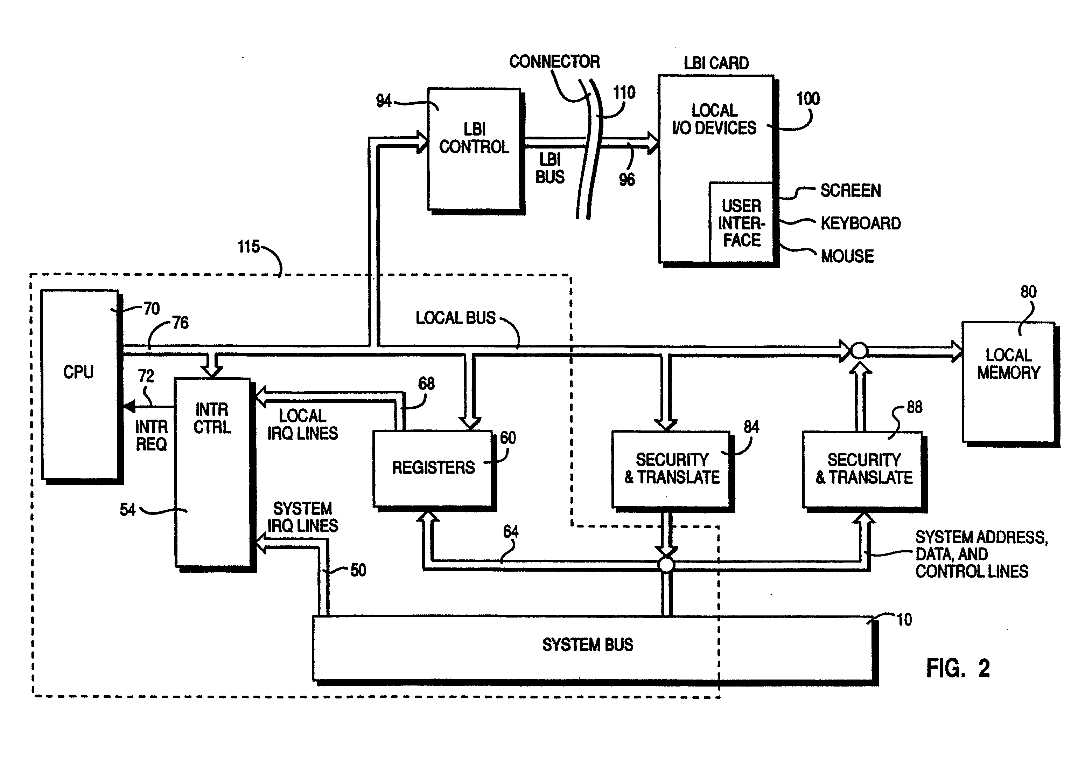

Fig. 2 shows in more detail, the functional elements of feature cards 30, 30$'$, 30$''$ in Fig. 1. System bus 10 provides interrupt request lines (IRQs) over bus 50 to interrupt controller 54. Signals generated by software executing host system processor 20 are input to subsystem registers 60 from system bus 10 and bus 64. Register 60 contents are transferred over bus 68 to interrupt controller 54. Subsystem processor 70 receives input from interrupt controller 54 over line 72. Output from subsystem processor 70 is placed on bus 76 which is connected to interrupt controller 54, subsystem registers 60 and subsystem local memory 80.

Bus 76 also connects subsystem processor 70 to system bus 10 via security and translate block 84. System bus 10 is Connected via bus 64 to security and translate box 88 which is connected by bus 90 to subsystem local memory 80.

Output from subsystem processor 70 on bus 76 is provided to local, subsystem bus interface control 94 which provides input over local system bus 96 to a selectable I/O device guest card 100. Selectable I/O device 100 also receives input from subsystem register block 60 over bus 104 and, as illustrated, provides an interface for interconnecting a video display (32, Fig. 1) and keyboard (34, Fig. 1) and other I/O devices such as a mouse.

Local bus 96 is is interconnected to guest card 100 at the local bus interface (LBI) indicated generally at 110.

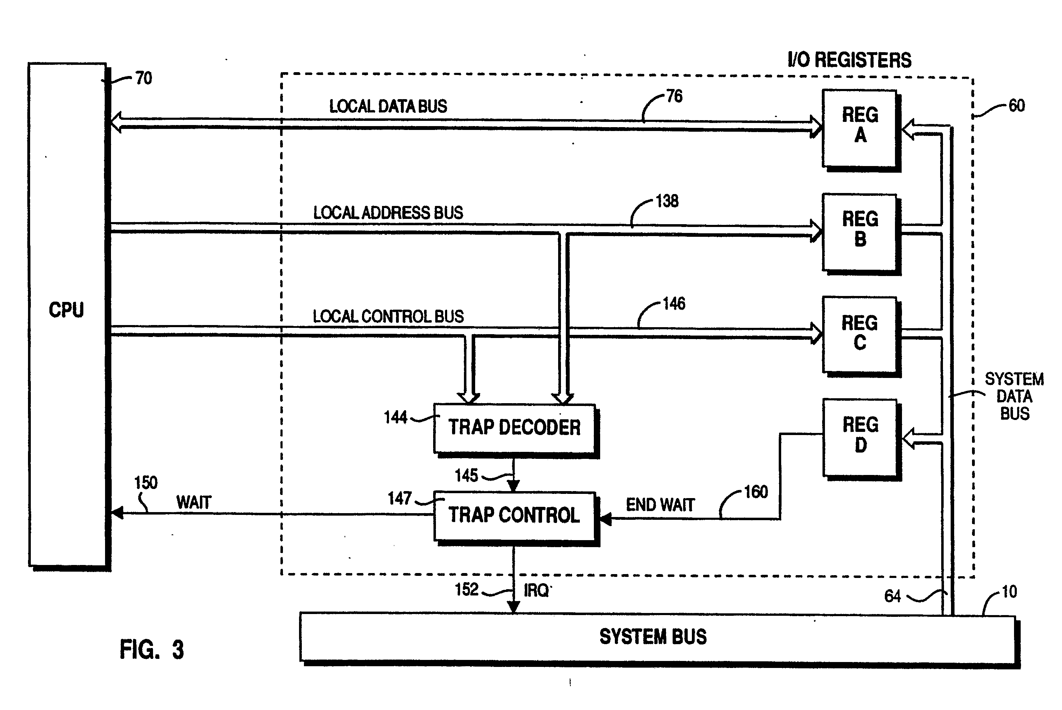

Refer now to Fig. 3 which shows schematically part of the contents of subsystem register block 60 of Fig. 2 as pertains to I/O cycles. Subsystem processor 70 outputs on local address bus 138 addresses for I/O cycles. A restricted address range decoder 144 in register block 60 is provided to monitor I/O cycles run by subsystem processor 70. The result of this monitoring is indicated on line 145.

Restricted address decoder 144 includes logic for determining as a function of the value on local address bus 138 and associated control signals on local control bus 146 whether subsystem processor 70 is attempting to run an I/O cycle in the restricted range. Logic in decoder 144 examines the address on bus 138. If the address is above the predetermined value, i.e. not in the restricted range, no intervention occurs and the I/O cycle runs to completion via bus 64 and system bus 10, accessing devices interconnected to the latter bus.

If, however, the address on bus 138 is within the restricted range, i.e. less than hex 108, decoder 144 outputs a signal over line 145 to the trap controller 147. Trap controller 147 placing subsystem processor 70 in a WAIT state over line 150. When trap controller 147 outputs the WAIT signal on line 150 to subsystem processor 70, it also places a signal on system bus 10 over IRQ line 152 indicating to host system processor 20 (Fig. 1) that subsystem processor 70 is attempting access to a host system private I/O device.

At this point in time control is assumed by host system 11 processor 20 (Fig. 1) for performing the requested I/O cycle to its private device, e.g. keyboard 14 in Fig. 1. I/O cycles occur through subsystem registers Reg A, Reg B and Reg C over bus 64.

When the requested I/O cycle is complete, host system processor 20 places appropriate signals on system bus 10 directed to subsystem register block 60 via bus 64 for setting Reg D such that an End WAIT signal is output on line 160, thereby instructing trap controller 147 to deactivate the WAIT signal on line 150.

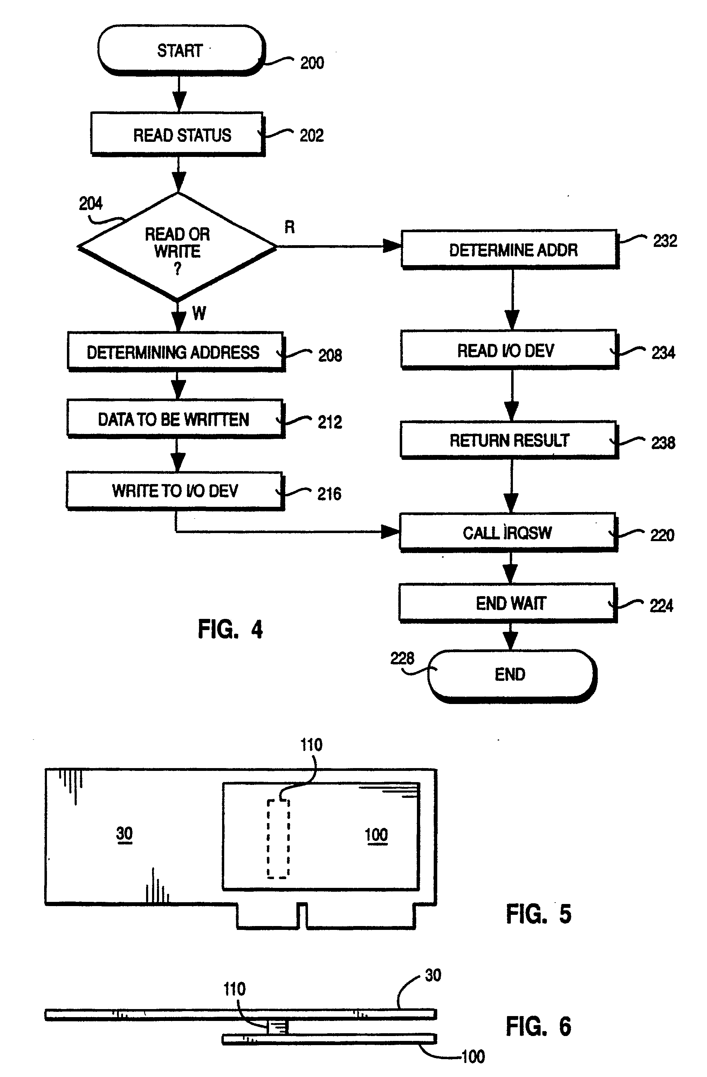

Refer now to Fig. 4 for an understanding of the logic followed by software executing in host system processor 20 when it assumes control for completing I/O cycles to its private device, initiated by subsystem processor 70. This explanation proceeds in conjunction with Fig. 3.

Entry to this routine at terminal 200 is obtained when a hardware interrupt is detected on line 152. At box 202, host processor 11 reads interrupt status which is set in Reg C which is set by subsystem local control bus 146. At box 204, host processor 11 then determines from the contents of Reg C, whether subsystem processor 70 is attempting to read or write. The following occurs if subsystem processor 70 is attempting to write. The address of the I/O device to be accessed is determined at block 208 by reading Reg B. Then host processor 11 reads Reg A to determine the data to be written. Data described by the contents of Reg A is then written to the I/O device at the address indicated by Reg B as shown at step 216 and IRQ software is called in block 220. Then Reg D is accessed for ending the I/O cycle at block 224, and the routine terminates at terminating step 228.

Returning to decision block 204, if it is determined that subsystem processor 70 is attempting a read cycle, the target address is determined from the contents of Reg B. Host processor 20 then reads from the I/O device as indicated at block 228. The results from the I/O device access are written to Reg A as represented at block 232 and IRQ software is called at block 220.

This cooperating combination of hardware and software is described in copending European Application No, a copy of which may be found on the file of the present application.

Host processor 20 then accesses Reg D to instruct control logic in decoder 144 to end the WAIT state in subsystem processor 70. As subsystem processor 70 completes its read cyole, Reg A drives its contents onto subsystem local data bus 76.

At this point, the subsystem processor has comple,ted its access to the intended, restricted register.

Those having skill in the art will recognize that the described invention is not restricted to a host/subsystem environment. It is generally applicable to any pair of processing systems.

It will be appreciated that we have provided apparatus and a method which advances the personal computer art by allowing the addition of an intelligent feature card, occupying but a single expansion slot, having the functional attributes of an essentially independent additional user work station. Further functional extendibility arises from the selectivity associated with guest card 100 (Fig. 1) which may enhance a basic system by enabling the addition of other I/O devices to the intelligent feature card without requiring additional slot space.

Refer now to Fig. 5 which shows a plan view of the physical structure of an feature card 30 (Fig. 1) with a guest card 100 electrically attached thereto. Fig. 6 is a side view of Fig. 5 taken along arrows 6 - 6. Connector 110 is chosen to be within height limits at least high enough to allow clearance between the components on feature card 30 and the back surface of guest card 110 but less than a height which, when added to the combined height of feature card 30 and guest card 100, would exceed slot width (including necessary clearance). It is this packaging technique which physically makes such embodiments of the present invention particularly attractive. Conventionally, the enhanced functionality could be achieved only at the expense of using additional slots, since a separate feature card would be required for the function now present on guest card 100.

While the invention has been shown and described having reference to aa particular preferred embodiment, those having skill in the art will appreciate that the above and various other modifications to form and detail made be made without departing from the scope of the invention as claimed.

## Claims

1. A method of access by a subsystem processor to host system I/O devices within a system comprising multiprocessors interconnected by a system bus, one of said processors being a host system and at least another of said processors being a subsystem processor, comprising the steps of:
monitoring I/O cycles attempted by said subsystem processor;
upon detecting an attempted access to an inaccessible I/O device in said host system,
putting said subsystem processor in a wait state while said host system performs the subsystem attempted I/O cycle; and

terminating the subsystem processor wait state when said I/O cycle is completed by said host system.

2. A method as claimed in Claim 1 wherein said monitoring step includes:

comparing subsystem processor address and control bus values with a predetermined range of values; and

setting an indicator when said values are within said predetermined range.

3. A method as claimed in Claim 2 wherein said putting step includes:

setting a wait signal active in response to said indicator being set; and

notifying said host processor of said subsystem processing attempt.

4. A method as claimed in any of Claims 1, 2 or 3 including the additional step before said terminating step of:

initiating a host system I/O cycle to said subsystem inaccessible device.

5. A method as claimed in any preceding claim wherein said terminating step includes:

initiating a communication from said host processor to said subsystem for ending said wait state.

6. A data processing apparatus comprising multiprocessors interconnected by a system bus, one of said processors being a host system and at least another of said processors being a subsystem processor;

means in said subsystem for monitoring all I/O cycle attempts by said subsystem;

means in said subsystem, operable in response to a detected attempted access to an inaccessible I/O device in said host system, for initiating placement of said subsystem in a wait state;

means in said host system for determining whether said subsystem processor attempted I/O is a read or write I/O cycle and performing same; and

means in said host system operable in response to completing said read or write I/O cycle for returning results of said I/O cycle to said subsystem processor, and terminating the wait state thereof.

7. A data processing apparatus as claimed in Claim 6 wherein said means for monitoring comprises:

comparing means for comparing subsystem address bus value with a predetermined range of addresses; and indicating means for indicating an attempted access to an inaccessible host system I/O device was detected.

8. A data processing apparatus as claimed in claim 7 including in said subsystem:

setting means responsive to said indicating means for setting a wait signal active; and

means for issuing an interrupt request to said host processor.

9. A data processing apparatus as claimed in any of claims 6, 7 or 8 including;

address determination means for use by said host system in performing said I/O cycle.

10. A data processing apparatus as claimed in any of claims 6 to 9 comprising:

data access means for use by said host system in performing said I/O cycle.

11. A feature card connectable via a system bus to a host processor comprising means for monitoring said system bus to detect a request to access an inaccessible I/O device of said host processor, a register for storing said request for subsequent reading by said host processor, means for transmitting a signal to said host processor via said system bus indicative of said request having been made, and means for suspending processing by said feature card until said host processor has read said register and performed said request.

12. A feature card as claimed in claim 11, including means for receiving a signal from said host processor indicating completion of said request and restarting processing by said feature card.

**FIG. 1**

FIG. 2

FIG. 3

I/O REGISTERS

CPU ~70

LOCAL DATA BUS ~76

LOCAL ADDRESS BUS ~138

LOCAL CONTROL BUS ~146

144~ TRAP DECODER

145~

150 WAIT

147~ TRAP CONTROL

152~ IRQ

SYSTEM BUS

REG A

REG B

REG C

REG D

~60

END WAIT ~160

SYSTEM DATA BUS

64~

~10

EP 0 427 539 A2

FIG. 4

FIG. 5

FIG. 6